# EUROPÄISCHE PATENTSCHRIFT

(11) **EP 0 452 635 B1**
(45) Veröffentlichungstag und Bekanntmachung des Hinweises auf die Patenterteilung: **15.12.1993**
(21) Anmeldenummer: 91102776.1
(22) Anmeldetag: 26.02.1991
(51) Int. Cl.: B65G 53/22, B65G 53/42, B65D 1/06

(54) **Pneumatische Pulvertransportvorrichtung**
Pneumatic powder transporting device
Dispositif de transport de poudre pneumatique

(30) Priorität: 14.04.1990 DE 4012190
(43) Veröffentlichungstag der Anmeldung: 23.10.1991
(73) Patentinhaber: Gema Volstatic AG, 9015 St. Gallen (CH)
(72) Erfinder: Gelain, Silvano, CH-9030 Abtwil (CH)
(74) Vertreter: Vetter, Ewald Otto, Dipl.-Ing.

(56) Entgegenhaltungen:
- DE-B- 2 055 690
- DE-B- 2 129 644
- US-A- 4 203 688

## Beschreibung

Die Erfindung betrifft eine pneumatische Pulvertransportvorrichtung, insbesondere für Beschichtungspulver, gemäß dem Oberbegriff von Anspruch 1.

Eine solche Pulvertransportvorrichtung ist aus den EP-0 184 994 B1 und 0 337 132 A2 bekannt. In der EP-0 184 994 B1 ist angegeben, daß mit der Fluidisier- und Absaugeinheit aus einem Pulverbehälter auch dann Pulver abgesaugt werden kann, wenn sich in diesem kein Fluidisierboden zum Fluidisieren des Pulvers befindet. Die Einheit kann durch eine Öffnung in einem Deckel des Behälters gesteckt werden und mit abnehmbarer Pulvermenge tiefer in den Behälter eingetaucht und dabei am Behälter axial geführt werden. Wenn der Behälter auf einen Vibrator gestellt wird, wird das Absaugen von Pulver, welches durch die Lagerung und den Transport im Behälter verfestigt worden ist, erleichtert.

In der zweitgenannten EP 0 337 132 A2 ist angegeben, daß als Förderpumpe für das Pulver in bekannter Weise eine Injektoreinrichtung verwendet werden kann, und daß bei Verwendung einer solchen Fluidisier- und Absaugeinheit, mit welcher das Pulver direkt aus einem Transportbehälter gesaugt werden kann, kein zusätzlicher gesonderter Pulverbehälter erforderlich ist, sondern das Pulver direkt aus dem Transportbehälter einer Pulververarbeitungseinrichtung zugeführt werden kann. Der einzige erforderliche Behälter ist also das Transportgefäß des Pulvers und kann demzufolge ein Karton, ein Sack oder ein Behälter aus Metall oder Kunststoff sein.

Bei der Beschichtung von Gegenständen mit Pulver führen bereits kleinste Schwankungen der Dichte des Pulver-Luft-Stromes oder der Auftreffgeschwindigkeit der Pulverpartikel auf den zu beschichtenden Gegenstand zu unbrauchbaren Beschichtungsqualitäten. In der vorgenannten EP-0 337 132 A2 heißt es zwar, daß das Pulver ohne Zwischenbehälter einer Verarbeitungseinrichtung zugeführt werden kann. Dies kann für pulverförmigen Sand oder andere Materialien zutreffen, jedoch nicht für Beschichtungspulver. Im Rahmen der Erfindung mit bekannten Vorrichtungen durchgeführte Versuche haben gezeigt, daß mit ihnen Pulvermengen pro Zeiteinheit nicht mit der für eine ausreichende Qualität von Oberflächenbeschichtungen ausreichenden Gleichmäßigkeit gefördert werden können. Ferner hat sich bei den im Rahmen der Erfindung durchgeführten Versuchen gezeigt, daß unter bestimmten Betriebsbedingungen in dem Behälter das Pulver lediglich unkontrolliert aufgewirbelt wird, jedoch kein für eine Absaugung erforderlicher "Fluidisierzustand" erreicht wird, also ein Zustand, bei welchem die Pulverpartikel in einem Luftpolster derart schweben, daß sie abgesaugt werden können. Ferner hat sich im Rahmen der Erfindung gezeigt, daß unter bestimmten Betriebsbedingungen die bekannten Vorrichtungen durch das im Behälter befindliche Pulver "hindurchfallen", statt auf der Pulveroberfläche eine fluidisierte Pulverschicht zu erzeugen. Auch dies macht die bekannten Vorrichtungen ungeeignet zum direkten Anschluß einer Sprühvorrichtung ohne die Zwischenschaltung eines Zwischenbehälters, welcher einen eigenen Fluidisierboden zum gleichförmigen Fluidisieren des Pulvers enthält. Ferner besteht bei den bekannten Vorrichtungen die Gefahr, daß das Pulver aus dem Behälter überströmt. Wenn der Behälter ein Sack ist, besteht bei unkontrollierten Bewegungen der Fluidisier- und Absaugeinheit die Gefahr, daß der Sack beschädigt wird.

Durch die Erfindung soll die Aufgabe gelöst werden, die genannten Nachteile zu vermeiden und eine pneumatische Pulvertransportvorrichtung zu schaffen, mit welcher Pulver aus einem Pulverbehälter, welcher keinen Fluidisierboden enthält, mit so gleichbleibender Fördermenge pro Zeiteinheit entnommen werden kann, daß auch mit einer direkt an sie angeschlossenen Sprühvorrichtung ohne Zwischenbehälter Beschichtungspulver mit einer ausreichend guten Beschichtungsqualität auf Gegenstände gesprüht werden kann. Gleichzeitig soll durch die Erfindung vermieden werden, daß die Vorrichtung durch das Pulver im Behälter "hindurchfällt", daß Pulver staubartig aufgewirbelt wird, ohne die Erzielung eines für das Absaugen erforderlichen stabilen Fluidisierzustandes, oder daß Pulver aus dem Behälter hinausgeblasen wird.

Diese Aufgabe wird gemäß der Erfindung durch die kennzeichnenden Merkmale von Anspruch 1 gelöst.

Weitere Merkmale der Erfindung sind in den Unteransprüchen enthalten.

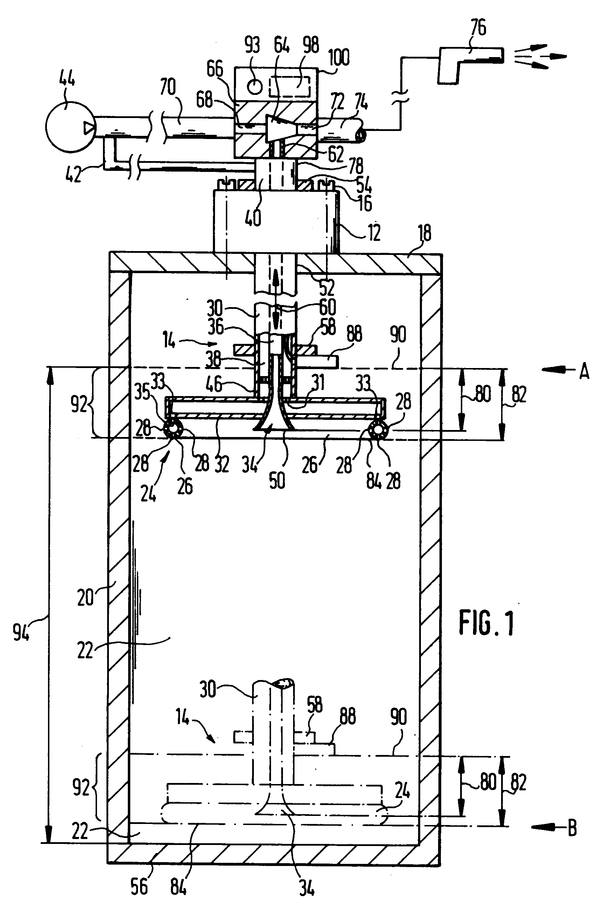

Die Erfindung wird im folgenden mit Bezug auf die Zeichnung anhand einer bevorzugten Ausführungsform als Beispiel beschrieben. Die Zeichnung zeigt in
- Fig. 1: einen Vertikalschnitt durch eine pneumatische Pulvertransportvorrichtung nach der Erfindung für Beschichtungspulver.

Die in Fig. 1 dargestellte Pulvertransportvorrichtung nach der Erfindung enthält eine Vorschubeinrichtung 12 zum vertikalen Führen und Bewegen einer Fluidisier- und Absaugeinheit 14. Die Vorschubeinrichtung 12 ist mittels Schrauben 16 auf einem Träger 18 befestigt, welcher im vorliegenden Fall der Deckel eines Behälters 20 ist, in welchem sich Pulver 22 befindet. Die Fluidisier- und Absaugeinhiet 14 besteht aus einer Fluidisiereinrichtung 24 und einer Absaugeinrichtung 34,die zusammen als eine Einheit vertikal bewegt werden können. Die Fluidisiereinrichtung 24 enthält mindestens ein in einer Horizontalebene ringförmig verlaufendes Fluidisierrohr 26 mit einer Vielzahl von engen Luftaustrittsöffnungen 28, ein vertikales Luftzufuhrrohr 30, und ein Verbindungsrohr 32, welches das Luftzufuhrrohr 30 mit dem Fluidisierrohr 26 mechanisch starr und über Öffnungen 31,33 und 35 strömungsmäßig verbindet.Die Absaugeinrichtung 34 enthält ein Absaugrohr 36, welches sich axial durch das Luftzufuhrrohr 30 erstreckt und mit ihm mechanisch starr verbunden ist. Zwischen dem Absaugrohr 36 und dem Luftzufuhrrohr 30 ist ein im Querschnitt ringförmiger Luftzufuhrkanal 38 gebildet, welcher am oberen Ende 40 über einen Schlauch 42 mit einer Druckluftquelle 44 und am unteren Ende 46 mit dem Innenraum des Verbindungsrohres 32 verbunden ist. Das trichterartig erweiterte untere Ende 50 des Absaugrohres 36 befindet sich ungefähr auf halber Höhe des Fluidisierrohres 26. Das Luftzufuhrrohr 30 erstreckt sich zusammen mit dem darin untergebrachten Absaugrohr 36 durch eine im Zentrum des Deckels 18 gebildete Öffnung 52 und durch die darüber angeordnete Vorschubeinrichtung 12, aus welcher die beiden Rohre nach oben hinausragen. Ihre unterste Position ist dann gegeben, wenn ein am Luftzufuhrrohr 30 befestigter Anschlag 54 auf der Vorschubeinrichtung 12 aufliegt, wie dies in Fig. 1 dargestellt ist. Bei dieser in Fig. 1 oben dargestellten Postition befindet sich jedoch das Fluidisierrohr 26 und das untere Ende 50 des Absaugrohres 36 nicht in der im Behälter oben dargestellten Position, sondern am oder nahe dem Behälterboden 56, was in Fig. 1 im Behälter unten durch strichpunktierte Linien als Position "B" dargestellt ist. Eine obere Position "A" nimmt das Fluidisierrohr 26 und das untere Ende 50 des Absaugrohres 36 dann ein, wenn ein zweiter Anschlag 58 von unten am Deckel 18 anliegt. Der zweite Anschlag 58 ist mit kleinem vertikalem Abstand oberhalb des Fluidisierrohres 26 am Luftzufuhrrohr 30 befestigt. Der Abstand hängt von der Größe des Behälters 20 und der Größe der dafür verwendeten Pulvertransportvorrichtung ab. Die beiden Anschläge 54 und 58 bestimmen somit den maximal möglichen vertikalen Hub 60, über welchen die Fluidisier- und Absaugeinheit 14 von der Vorschubeinrichtung 12 bewegt werden kann. Gemäß einer Abwandlungsmöglichkeit kann auf die Vorschubeinrichtung 12 verzichtet und die Fluidisier- und Absaugeinheit 14 von Hand auf- und abbewegt werden. Das obere Ende 62 des Absaugrohres 36 ist an den Unterdruckbereich 64 eines als Förderpumpe diendenden Injektors 66 angeschlossen, dessen Einlaß 68 über einen Schlauch 70 an die Druckluftquelle 44 angeschlossen ist, und dessen Auslaß 72 über einen Schlauch 74 an eine Sprühpistole 76 zum Sprühbeschichten von Gegenständen angeschlossen ist. Der Injektor 66 ist an den oberen Enden 78 und 62 des Luftzufuhrrohres 30 und des Absaugrohres 36 befestigt und saugt über das Absaugrohr 36 fluidisiertes Pulver aus dem Behälter 20 und fördert dieses Pulver in einem Luftstrom durch den Schlauch 74 zur Sprühpistole 76.

An der Fluidisier- und Absaugeinheit 14 ist in einem bestimmten Höhen-Abstand 80 oberhalb des Endes 50 des Absaugrohres 36, und damit auch in einem bestimmten Höhenabstand 82 oberhalb der unteren Fläche 84 des Fluidisierrohres 26, ein Niveausensor 88 befestigt. Bei der in der Zeichnung dargestellten Ausführungsform ist der Niveausensor 88 an dem Luftzufuhrrohr 30 unterhalb des zweiten Anschlages 58 befestigt. Die Höhenabstände 80 und 82 sind so groß, daß der Niveausensor 88 auf das Niveau 90 der fluidisierten Pulverschicht 92 über dem Pulver 22 anspricht, und ein bestimmtes elektrisches Signal erzeugt, wenn sich das untere Ende 50 des Absaugrohres 36 in einer bestimmten Tiefe in der fluidisierten Pulverschicht 92 befindet. Die fluidisierte Pulverschicht 92 entsteht in bekannter Weise dadurch, daß die obere Schicht des Pulvers 22 durch die Luft der Druckluftquelle 44 in einem "Schwebezustand" gehalten wird, bei welchem das Luft-Pulver-Gemisch im wesentlichen die gleiche "Fließfähigkeit" wie eine Flüssigkeit hat. Der Niveausensor 88 erfaßt das Niveau 90 und erzeugt in Abhängigkeit davon ein elektrisches Signal, welches an einem elektrischen Anzeigegerät 93 anzeigt, ob sich der Niveausensor 88 auf der Höhe des Niveaus 90 der fluidisierten Pulverschicht 92 befindet. Ferner steuert das elektrische Signal des Niveausensors 88 die Vorschubeinrichtung 12 derart, daß der Niveausensor 88 zusammen mit der Fludisier- und Absaugeinheit 14 dem Niveau 90 der fluidisierten Pulverschicht 92 nachfährt, also bei sich entleerendem Behälter mit dem Niveau 90 nach unten sinkt, so daß der Niveausensor 88 sich stets auf der Höhe des Niveaus 90 befindet. Damit hat zwangsweise auch das untere Ende 50 des Absaugrohres 36 stets den gleichen Höhenabstand 80 vom Niveau 90 der fluidisierten Pulverschicht 92, und die untere Fläche 84 sowie die Luftauslaßöffnungen 28 des Fluidisierrohres 26 haben stets den gleichen Höhenabstand 82 vom Niveau 90 der fluidisierten Pulverschicht 92, unabhängig davon, wie weit der Pulverbehälter voll ist oder bereits entleert ist. Dadurch wird gemäß der Erfindung gewährleistet, daß in der fluidisierten Pulverschicht 92 im Bereich des pulverabsaugenden Endes 50 des Absaugrohres 36 unabhängig von der Pulverhöhe 94 im Behälter 20 stets eine gleiche Pulverkonzentration und gleiche Pulver-Luft-Strömungsverhältnisse herrschen. Dadurch wird gewährleistet, daß der Injektor 66 unabhängig von der Pulverhöhe 94, bezogen auf einen bestimmten Luftstrom durch den Injektor 66 von der Druckluftquelle 44, stets eine konstante Menge Pulver zu seinem Auslaß 72 fördert. Dadurch wird mit der Sprühpistole 76 eine gleichförmige gute Beschichtungsqualität des mit dem Pulver beschichteten Gegenstandes erzielt, auch dann, wenn die Sprühpistole 76 direkt an dem Auslaß 72 des Injektors 66 angeschlossen ist.

Der Niveausensor 88 kann eine elektrische Stromquelle oder Spannungsquelle enthalten und in Abhängigkeit davon, ob er sich auf der Höhe des Niveaus 90 befindet oder nicht, ein elektrisches Signal abgeben. Vorteilhafter ist jedoch eine elektrische Schaltung bekannter Art, welche einen Stromzweig hat, dessen Widerstand vom Niveausensor 88 in Abhängigkeit davon verändert wird, ob sich der Niveausensor 88 auf dem Niveau 90 befindet. Eine solche elektrische Steuerschaltung 98 befindet sich zusammen mit dem elektrischen Anzeigegerät 93 in einem Gehäuse 100 am Injektor 66 und wird wegen der für einen Fachman bekannten Schaltungstechnik hier nicht im einzelnen beschrieben.

Auch Einzelheiten der Vorschubeinrichtung 12 werden hier nicht im einzelnen beschrieben, da dem Fachmann genügend Vorschubeinrichtungen für Hubbewegungen bekannt sind.

Das Anzeigegerät 93 ergibt die Möglichkeit, die Fluidisier- und Absaugeinheit 14 ohne die Vorschubeinrichtung 12 von Hand dem Niveau 90 der fluidisierten Pulverschicht 92 nachzufahren. Dabei ist das Anzeigegerät 93 vorzugsweise so geschaltet, daß es ein optisches Signal erzeugt, solange sich der Niveausensor 88 auf dem Niveau 90 der fluidisierten Pulverschicht 92 befindet, und das optische Signal erlischt, wenn die Höhe des Niveausensors 88 von der Höhe des Niveaus 90 der fluidisieren Pulverschicht abweicht.

Anstelle einer von Hand bedienbaren Sprühpistole 76 können auch automatische Sprühgeräte an den Auslaß 72 des Injektors 66 angeschlossen werden. Je nach Pulversorte, nach Art des Behälters - massiver Behälter, Karton, flexibler Sack oder dgl. - , und in Abhängigkeit von anderen Kriterien ist es selbstverständlich möglich, den Behälter auch auf einen Vibrator zu stellen. Ein Vibrator erleichtert das Fluidisieren des Pulvers.

## Patentansprüche

1. Pneumatische Pulvertransportvorrichtung, insbesondere für Beschichtungspulver, mit einer Fluidisier- und Absaugeinheit, welche in einen Pulver enthaltenden Behälter eintauchbar ist, um darin das Pulver zu fluidisieren und das fluidisierte Pulver abzusaugen,
**dadurch gekennzeichnet**,
daß die Fluidisier- und Absaugeinheit (14) mit einer Niveausonde (88) versehen ist, welche ein Signal in Abhängigkeit von der Eintauchtiefe (80, 82), in welche die Fluidisier- und Absaugeinheit (14) in eine von ihr fluidisierte Pulverschicht (92) eingetaucht ist, erzeugt.

2. Pneumatische Pulvertransportvorrichtung nach Anspruch 1,
**dadurch gekennzeichnet**,
daß eine Vorschubeinrichtung (12) vorgesehen ist, welche die Eintauchbewegung der Fluidisier- und Absaugeinheit (14) in Abhängigkeit von dem Signal der Niveausonde (88) steuert.

3. Pneumatische Pulvertransportvorrichtung nach Anspruch 1 oder 2,
**dadurch gekennzeichnet,**
daß ein Anzeigegerät (93) vorgesehen ist, welches in Abhängigkeit vom Signal der Niveausonde (88) ein optisches oder akustisches Signal erzeugt.

4. Pneumatische Pulvertransportvorrichtung nach einem der Ansprüche 1 bis 3,
**dadurch gekennzeichnet,**
daß an einen Absaugkanal (36) der Fluidisier- und Absaugeinheit (14) über eine Förderpumpe (66) ein Sprühgerät (76) zum Sprühen von Pulver auf einen zu beschichtenden Gegenstand angeschlossen ist.

## Claims

1. A pneumatic powder transporting device, in particular for coating powder, having a fluidisation and suction unit, which can be immersed into a container containing the powder in order to fluidise the powder and to remove the fluidised powder by suction,
**characterised in that** the fluidisation and suction unit (14) is provided with a level sensor (88), which produces a signal as a function of the immersion depth (80, 82), into which the fluidisation and suction unit (14) is immersed in a powder layer (92) fluidised thereby.

2. A pneumatic powder transporting device according to Claim 1,
**characterised in that** a feed mechanism (12) is provided, which controls the immersion movement of the fluidisation and suction unit (14) as a function of the signal of the level sensor (88).

3. A pneumatic powder transporting device according to Claim 1 or 2,
**characterised in that** an indicator (93) is provided, which produces an optical or acoustic signal as a function of the signal of the level sensor (88).

4. A pneumatic powder transporting device according to one of Claims 1 to 3,
**characterised in that** a spray appliance (76) for spraying powder onto an item to be coated is connected to a suction pipe (36) of the fluidisation and suction unit (14) via a feed pump (66).

## Revendications

1. Dispositif de transport pneumatique de poudre, destiné en particulier à de la poudre de revêtement, et comprenant une unité de fluidisation et d'aspiration qui peut être plongée dans un réservoir contenant une poudre, afin d'y fluidiser la poudre et d'en aspirer la poudre fluidisée, caractérisé par le fait que l'unité de fluidisation et d'aspiration (14) est munie d'une sonde de niveau (88) qui engendre un signal en fonction de la profondeur (80, 82) à laquelle l'unité de fluidisation et d'aspiration (14) est enfoncée dans une couche de poudre (92) qu'elle a fluidisée.

2. Dispositif de transport pneumatique de poudre selon la revendication 1, caractérisé par le fait qu'il est prévu un dispositif d'avance (12) qui commande le déplacement d'enfoncement de l'unité de fluidisation et d'aspiration (14) en fonction du signal de la sonde de niveau (88).

3. Dispositif de transport pneumatique de poudre selon la revendication 1 ou 2, caractérisé par le fait qu'il est prévu un appareil d'affichage (93) qui engendre un signal optique ou acoustique en fonction du signal de la sonde de niveau (88).

4. Dispositif de transport pneumatique de poudre selon l'une des revendications 1 à 3, caractérisé par le fait qu'un appareil de pulvérisation (76) destiné à pulvériser de la poudre sur un objet à revêtir est raccordé par l'intermédiaire d'une pompe de déplacement (66) à un canal d'aspiration (36) de l'unité de fluidisation et d'aspiration (14).
